# EUROPEAN PATENT SPECIFICATION

(11) **EP 3 536 019 B1**
(45) Date of publication and mention of the grant of the patent: **25.03.2026**
(21) Application number: 16920830.3
(22) Date of filing: 04.11.2016
(51) Int. Cl.: H04W 28/04, H04L 1/16

(54) **SINGLE CELL POINT-TO-MULTIPOINT FEEDBACK**
EINZELZELL-PUNKT-ZU-MEHRPUNKT-RÜCKKOPPLUNG
RÉTROACTION POINT À MULTIPOINT MONO-CELLULE

(43) Date of publication of application: 11.09.2019
(73) Proprietor: Nokia Technologies Oy, 02610 Espoo (FI)
(72) Inventor: ZHANG, Yuantao, Beijing 100012 (CN); ZHANG, Yanji, Beijing 100029 (CN)
(74) Representative: Mudge, Kevin
(86) International application number: PCT/CN2016/104647
(87) International publication number: WO 2018/082023

(56) References cited:
- EP-A1- 2 445 295
- WO-A1-2010/034182
- WO-A1-2013/159585
- WO-A1-2014/098384
- CN-A- 101 400 101
- CN-A- 101 400 127
- US-A1- 2016 173 261
- PHILIPS: "CQI Signalling Occasions", 3GPP DRAFT; R1-061485, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20060428, 28 April 2006 (2006-04-28), XP050102334
- HUAWEI ET AL: "Uu DL enhancements for V2X", vol. RAN WG1, no. Nanjing, China; 20160523 - 20160527, 14 May 2016 (2016-05-14), XP051090106, Retrieved from the Internet <URL:http://www.3gpp.org/ftp/tsg_ran/WG1_RL1/TSGR1_85/Docs/> [retrieved on 20160514]

## Description

### BACKGROUND:

### Field:

Various communication systems may benefit from appropriately configured feedback. For example, certain embodiments may benefit from single cell point-to-multipoint feedback methods and mechanisms.

### Description of the Related Art:

Third generation partnership project (3GPP) long term evolution (LTE) can include enhancements of narrow band internet of things (NB-IoT) and further enhanced machine type communication (eMTC). The support of downlink (DL) multicast transmission may involve extensions to single cell (SC) point-to-multipoint (PTM).

SC-PTM in NB-IoT can be supported at least in radio resource control (RRC) idle mode and may possibly be supported in RRC connected mode.

The release 13 (Rel-13) SC-PTM architecture is assumed for multi-cast design for NB-IoT and MTC. Reception of multi-cast in RRC_IDLE mode may be required by both NB-IoT and MTC. Moreover, reception of multi-cast in RRC_CONNECTED mode may not be required for NB-IoT and may or may not be required for MTC.

The legacy SC multicast traffic channel (MTCH) mechanism in which the SC-MTCH is scheduled by physical downlink control channel (PDCCH) can be reused for multi-cast in NB-IoT and MTC to achieve flexible scheduling. Moreover, repetition for SC-MTCH transmission can be introduced for multi-cast in NB-IoT and MTC. Furthermore, both SC multicast control channel (MCCH) and SC-MTCH may or may not be scheduled on anchor carrier and/or non-anchor carrier for NB-IoT. SC-MCCH and SC-MTCH may possibly be scheduled on different carriers for NB-IoT and for MTC, for example narrowband for MTC.

PHILIPS, "COI Signalling Occasions", 3GPP DRAFT; R1-061485, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20060428), vol. RAN WG1, no. Shanghai, China; 20060428, XP050102334 discusses the occasions when reporting of channel quality indicators (CQIs) by the UE is useful, and proposes conclusions on suitable mechanisms.

US 2016/0173261 A1 discloses a method and apparatus for sending and receiving CQIs.

### SUMMARY:

The invention is defined in independent claims 1, 5 and 7.

### BRIEF DESCRIPTION OF THE DRAWINGS:

For proper understanding of the invention, reference should be made to the accompanying drawings, wherein:
Figure 1 illustrates starting transport blocks with scheduling and user equipment feedback for semi-persistent scheduling, according to certain embodiments.
Figure 2 illustrates feedback periodicity and SPS activation/reconfiguration periodicity, according to certain embodiments.
Figure 3 illustrates a flow chart for SPS for SC-PTM and related feedback, according to certain embodiments.
Figure 4 illustrates a method according to certain embodiments.
Figure 5 illustrates a system according to certain embodiments.

### DETAILED DESCRIPTION:

For the multicast message transmitted to RRC idle mode UEs, the base state may lack channel state information of such user equipment (UEs) before transmission. To enable a robust performance, which is necessary for SC-PTM services like firmware updates, the efficient UE feedback helping base station adjust the transmission parameters such as modulation and coding scheme (MCS) level and repetition number is desired.

Certain embodiments may relate to support for physical random access channel (PRACH) based feedback. For example, an NB-IoT PRACH (NPRACH) preamble can be used for UEs to indicate negative acknowledgement (NACK) in response to failed reception of an SC-MTCH hybrid automatic repeat request (HARQ) process. This feedback could be configured to be used by only a subset of UEs, for example NPRACH CE level 3, and not require a full RRC connection to be set up. A benefit or advantage of this approach can be that the UE can stay in idle mode. However, the network may need to perform multicast retransmissions. Certain embodiments provide a layer 1 (L1) feedback scheme for SC-PTM for RRC idle mode UEs.

In certain embodiments, for a multicast message transmitted to a group of RRC idle mode UEs, when a UE does not receive a data transport block (TB), that UE can feed back a PRACH preamble indicating the measured DL channel state information (CSI). The feedback CSI can be a channel quality index (CQI). To enable such functionality, there can be a pre-defined relation between preamble identifier (ID) and the CQI. Thus, when a base station (BS) or other access node receives a preamble, the BS can get the UE observed channel status. In another embodiment, the feedback CSI can be a reference signal received power (RSRP) or the like. There can be a predefined relation between preamble ID and an RSRP range.

The BS can retransmit the data block according to the received CSI from the UEs. For example, the BS can determine a modulation and coding scheme (MCS), or a repetition level based on the worst received CSI for the data block retransmission and also for the following transmission of new data blocks.

For SC-PTM with dynamic scheduling, the UE may always send a preamble indicating a CQI when the UE does not detect the corresponding data block. For SC-PTM with semi-persistent scheduling (SPS), the BS can configure a certain number of starting transport blocks, for which UE can feed back a preamble indicating a CQI, if the UE does not detect any of these TBs. The transmission and the retransmission of these TBs can be based on explicitly scheduling. For the rest of TBs, there may be no corresponding specific control signaling transmitted. The BS can determine an appropriate MCS according to the UE feedback, and can be used for the rest of the TB transmission. The UE can refrain from feeding back anything for the rest of the TBs.

The configuration of number of starting TBs for feedback, and the feedback periodicity can be carried in an information element, such as in SCPTMConfiguration.

The SPS configuration parameters can be included in SCPTMConfiguration, including the semiPersistSchedIntervalDL. The SPS transmission can be activated or reconfigured by the physical downlink control channel (PDCCH) downlink channel indicator (DCI) scrambled by SPS cell radio network temporary identifier (C-RNTI) (SPS-C-RNTI).

As an extension, there could be a configured periodicity for UE feedback, in order to efficiently transmit long SC-PTM data packets. The periodicity could be configured as a multiple of the DL SPS intervals. The UE can be configured to provide the feedback for the first several TBs for each feedback periodicity.

The UE could get the SPS scheduling information even for those which enter the cell in the middle of a multimedia broadcast multicast services (MBMS) service session. The PDCCH for activating or reconfiguring the SPS could be sent with a preconfigured cycle as well.

The following configuration could be provided in the SCPTMConfiguration: the periodicity of the feedback; the number of the TB feedback needed within each periodicity; a cycle of the SPS reconfiguration/activation indicated by PDCCH addressed by SPS C-RNTI; or any combination thereof.

Thus, to enable robust SC-MTCH transmission for RRC idle mode UEs, in certain embodiments the UE can feed back a preamble indicating the measured channel status, if the UE does not receive an SC-PTM data block. There can be a pre-defined relation between the preamble ID and the CSI. For example, if CSI is indicated using CQI, there can be a predefined table as in Table 1:

**Table 1. Predefined relation between CQI and preamble**

| CQI Index | Preamble ID |
|---|---|
| 0 | K1 |
| 1 | K2 |
| 2 | K3 |
| ... | ... |

As another example, there can be a pre-defined relation between the preamble ID and the delta CSI. This delta CSI is the difference between the UE observed CSI with the CSI allocated from the base station. Table 2 illustrates such a relation, where Delta-CQI index equals to the CQI allocated by BS minus the CQI index UE observed.

**Table 2. Predefined relation between Delta-CQI and preamble**

| Delta-CQI Index | Preamble ID |
|---|---|
| 0 | I1 |
| 1 | I2 |
| 2 | I3 |
| ... | ... |

When a base station gets a preamble or multiple preambles, the base station can know the channel status of the feedback UEs. The base station cam retransmit the data block according to the received CSI from these UEs. For example, the base station can determine a modulation and coding scheme or a repetition level based on the worst received CSI for the data block retransmission and the also for the following new data blocks transmission.

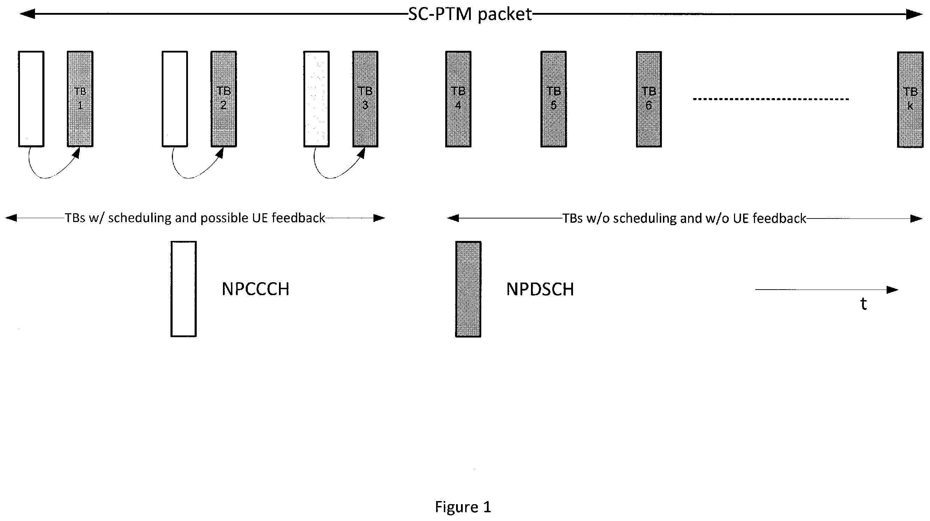

Figure 1 illustrates starting transport blocks with scheduling and user equipment feedback for semi-persistent scheduling, according to certain embodiments. Figure 1 provides an illustrative example in which the starting three TBs are based on explicit scheduling and require UE feedback. If the UE misses detection of any of these TBs, the UE can feed back a preamble indicating the channel status. Other TBs, from TB 4 to TB k may not have associated control signaling, following an SPS principle, and the UE can avoid feeding back anything for these TBs.

As mentioned above, there could be a configured periodicity for UE feedback, in order to efficiently transmit long SC-PTM data packets. The periodicity of such feedback could be configured as number of DL SPS intervals. In addition, to avoid missing SPS activation or reconfiguration for those UE which start the reception from the middle of the service session, the PDCCH for activating or reconfiguring could be transmitted in a pre-configuration.

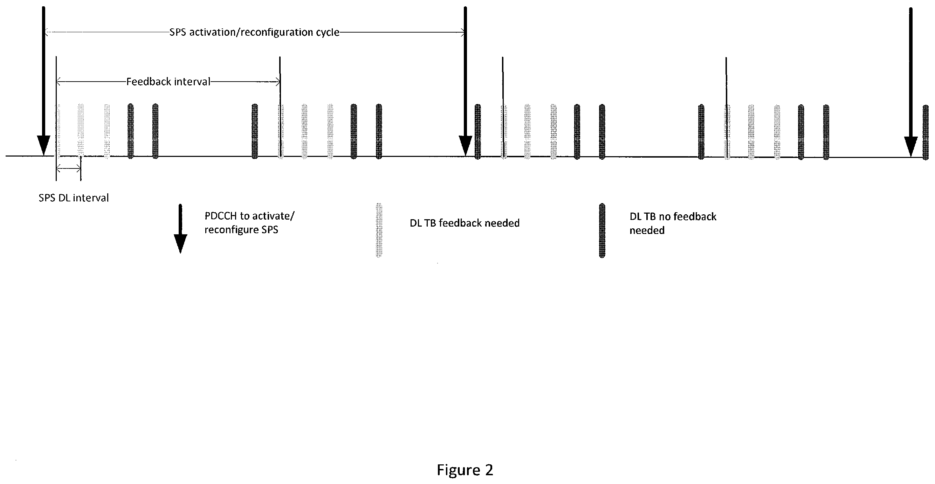

Figure 2 illustrates feedback periodicity and SPS activation/reconfiguration periodicity, according to certain embodiments. As shown in Figure 2, the SPS DL interval can be shorter than a feedback interval, which can be shorter than an SPS activation/reconfiguration cycle. The configuration of number of starting TBs for feedback, and the feedback periodicity, the cycle of the SPS activation or reconfiguration can be carried in the SCPTMConfiguration.

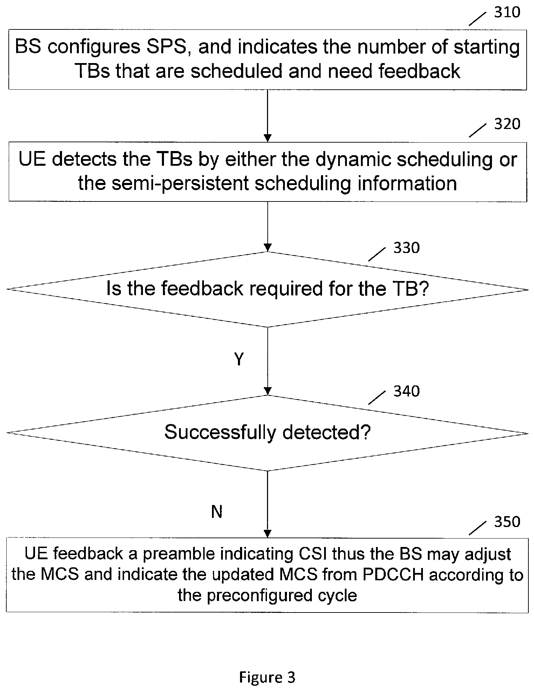

Figure 3 illustrates a flow chart for SPS for SC-PTM and related feedback, according to certain embodiments. Figure 3 illustrates a typical flow chart for a whole process, which summarizes the actions from BS and UEs when in SPS for SC-PTM.

As shown in Figure 3, at 310, the BS can configure SPS and can indicate the number of starting TBs that are scheduled and need feedback. At 320, the UE can detect the TBs by either the dynamic scheduling or the sem-persistent scheduling information.

At 330, a determination can be made as to whether feedback is required for a particular TB. If so, at 340 a determination can be made regarding whether the given TB was successfully detected.

At 350, the UE can feed back a preamble indicating CSI. Thus, the base station may adjust the MCS and may indicate the updated MCS from the PDCCH, according a preconfigured cycle.

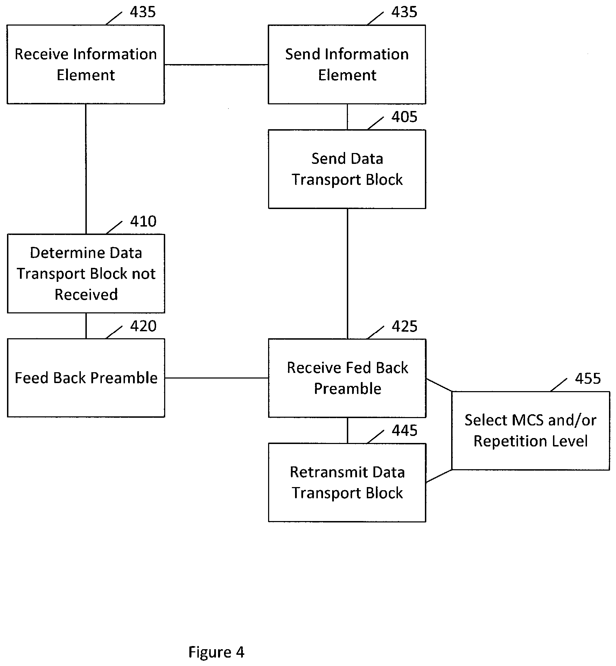

Figure 4 illustrates a method according to certain embodiments. As shown in Figure 4, a method can include, at 405, sending, to a user equipment, a data transport block. The method can also include, at 410, determining, by a user equipment, that the data transport block was not received.

The method can also include, at 420, feeding back, by the user equipment, a preamble indicating a measured downlink channel state information responsive to the determination that the data transport block was not received. Accordingly, the method can also include, at 425, receiving feedback, from the user equipment, including a preamble indicating a measured downlink channel state information and indicative of non-reception of the data transport block by the user equipment. This can be the same preamble sent at 420.

The preamble can be a physical random access channel preamble. The channel state information can be indicated using a predefined relationship between preamble identifier and channel state information. For example, the relationship illustrated in Table 1 is an example of such a predefined relationship.

The channel state information can include a channel quality index, a reference signal received power, a reference signal received quality, a reference signal strength indication, a signal to interference plus noise ratio or any combination thereof. Other indicators of channel quality are also permitted.

The feedback can be configured to occur for each data transport block that was not received or to occur when a transport block from a set of identified transport blocks was not received. For example, the set of identified transport blocks can be a set of starting transport blocks of a group of transport blocks. The feedback can be configured to occur with a configured periodicity.

The method can further include, at 435, sending, to the user equipment, an information element configured to indicate at least one of a number of transport blocks in a predefined set of reportable transport blocks, a periodicity for the feedback of the measured downlink channel state information, or a cycle of semi-persistent scheduling reconfiguration or activation. The feedback including the preamble can be based on the received information element. Accordingly, the method can also include, at 430, receiving, by the user equipment, an information element configured to indicate at least one of a number of transport blocks in a predefined set of reportable transport blocks, a periodicity for the feedback of the measured downlink channel state information, or a cycle of semi-persistent scheduling reconfiguration or activation. This can be the same information element sent at 435.

The method can additionally include, at 445, retransmitting, by an access node, the data transport block according to received preamble. This access node can be the same device that sent the data transport block at 405, received the feedback at 425, and sent the information element at 435.

The method can additionally include, at 455, selecting a modulation and coding scheme, a repetition level, or both a modulation and coding scheme and a repetition level, based on the preamble. The retransmitting at 445 can include applying the selected modulation and coding scheme or repetition level.

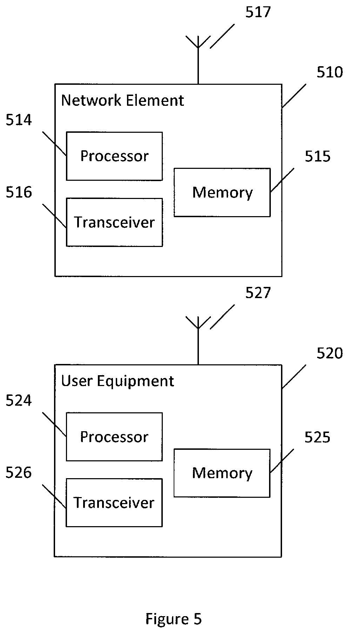

Figure 5 illustrates a system according to certain embodiments of the invention. It should be understood that each block of the flowchart of Figure 4 may be implemented by various means or their combinations, such as hardware, software, firmware, one or more processors and/or circuitry. In one embodiment, a system may include several devices, such as, for example, network element 510 and user equipment (UE) or user device 520. The system may include more than one UE 520 and more than one network element 510, although only one of each is shown for the purposes of illustration. A network element can be an access point, a base station, an eNode B (eNB), or any other access node or other network element.

Each of these devices may include at least one processor or control unit or module, respectively indicated as 514 and 524. At least one memory may be provided in each device, and indicated as 515 and 525, respectively. The memory may include computer program instructions or computer code contained therein, for example for carrying out the embodiments described above. One or more transceiver 516 and 526 may be provided, and each device may also include an antenna, respectively illustrated as 517 and 527. Although only one antenna each is shown, many antennas and multiple antenna elements may be provided to each of the devices. Other configurations of these devices, for example, may be provided. For example, network element 510 and UE 520 may be additionally configured for wired communication, in addition to wireless communication, and in such a case antennas 517 and 527 may illustrate any form of communication hardware, without being limited to merely an antenna.

Transceivers 516 and 526 may each, independently, be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. It should also be appreciated that according to the "liquid" or flexible radio concept, the operations and functionalities may be performed in different entities, such as nodes, hosts or servers, in a flexible manner. In other words, division of labor may vary case by case. One possible use is to make a network element to deliver local content. One or more functionalities may also be implemented as a virtual application that is provided as software that can run on a server.

A user device or user equipment 520 may be a mobile station (MS) such as a mobile phone or smart phone or multimedia device, a computer, such as a tablet, provided with wireless communication capabilities, personal data or digital assistant (PDA) provided with wireless communication capabilities, vehicle, portable media player, digital camera, pocket video camera, navigation unit provided with wireless communication capabilities or any combinations thereof. The user device or user equipment 520 may be a sensor or smart meter, or other device that may usually be configured for a single location.

In an exemplifying embodiment, an apparatus, such as a node or user device, may include means for carrying out embodiments described above in relation to Figure 4.

Processors 514 and 524 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors. Additionally, the processors may be implemented as a pool of processors in a local configuration, in a cloud configuration, or in a combination thereof. The term circuitry may refer to one or more electric or electronic circuits. The term processor may refer to circuitry, such as logic circuitry, that responds to and processes instructions that drive a computer.

For firmware or software, the implementation may include modules or units of at least one chip set (e.g., procedures, functions, and so on). Memories 515 and 525 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as network element 510 and/or UE 520, to perform any of the processes described above (see, for example, Figure 4). Therefore, in certain embodiments, a non-transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc., or a low-level programming language, such as a machine language, or assembler. Alternatively, certain embodiments of the invention may be performed entirely in hardware.

Furthermore, although Figure 5 illustrates a system including a network element 510 and a UE 520, embodiments of the invention may be applicable to other configurations, and configurations involving additional elements, as illustrated and discussed herein. For example, multiple user equipment devices and multiple network elements may be present, or other nodes providing similar functionality, such as nodes that combine the functionality of a user equipment and an access point, such as a relay node.

Certain embodiments may have various benefits and/or advantages. For example, by feeding back a preamble indicating the channel status when there is a missed detection of a transport block, certain embodiments may enable a base station to quickly adjust transmission parameters, such as MCS and repetition number, for radio resource control (RRC) idle mode UEs receiving multicast packets. Thus, the overall miss detection rate can be reduced. This may be valuable for SC-PTM, where the miss detection from one UE can incur broadcasting of the retransmission to all UEs.

One having ordinary skill in the art will readily understand that the invention as discussed above may be practiced with steps in a different order, and/or with hardware elements in configurations which are different than those which are disclosed.

The scope of protection of the invention is defined in the appended set of claims.

### List of Abbreviations

3GPP: 3rd generation project partner
LTE: Long term evolution
IoT: Internet of thing
MTC: Machine type communication
NB: Narrowband
UE: User equipment
RRC: Radio resource control
PRACH: Physical random access channel
UL: Uplink
DL: Downlink
TB: Transport block
MCS: Modulation and coding scheme
CQI: Channel quality indicator
CSI: Channel state information
SPS: Semi-static scheduling
SC-MTCH: Single Cell Multicast Transport Channel
SC-MCCH: Single Cell Multicast control Channel
SC-PTM: Single Cell Point To Multipoint

## Claims

1. A user equipment (520) configured to operate in a 3GPP system and comprising means for performing:
receiving (435) an information element configured to indicate:
a number of transport blocks for reporting feedback containing measured downlink channel state information,
a periodicity for the feedback, and
a cycle of semi-persistent scheduling reconfiguration or activation;
determining (410) that a data transport block was not received; and
in response feeding back (420) a preamble indicating measured downlink channel state information, wherein the preamble is indicative of non-reception of the data transport block by the user equipment,
wherein the preamble comprises a physical random access channel preamble and wherein the preamble triggers a retransmission of the data transport block,
receiving a retransmission of the data transport block triggered by the preamble, wherein the modulation and coding scheme or the repetition level used for the data transport block is set according to the measured downlink channel state information indicated in the preamble.

2. The user equipment (520) of claim 1, wherein the measured downlink channel state information is indicated based on one of:
a predefined relationship between an identifier of the preamble and the measured downlink channel state information, or
a predefined relationship between the identifier of the preamble and relative channel state information indicating a difference between channel station information allocated by a network element (510) and the measured downlink channel state information.

3. The user equipment (520) of claim 1, wherein the measured downlink channel state information comprises at least one of a channel quality index, reference signal received power, reference signal received quality, a reference signal strength indication, and a signal to interference plus noise ratio.

4. The user equipment (520) of claim 1, wherein the feeding back is configured to occur in one of the following manners:
for each data transport block that was not received,
when a transport block from a set of identified transport blocks was not received, or
with a configured periodicity.

5. A network element (510) configured to operate in a 3GPP system and comprising means for performing:
transmitting (435) an information element configured to indicate:
a number of transport blocks for reporting feedback containing measured downlink channel state information,
a periodicity for the feedback, and
a cycle of semi-persistent scheduling reconfiguration or activation
sending a data transport block to a user equipment (520);
receiving a feedback, from the user equipment (520), the feedback comprising a preamble indicating measured downlink channel state information and indicative of non-reception of the data transport block by the user equipment, wherein the preamble comprises a physical random access channel preamble and wherein the preamble triggers a retransmission of the data transport block; and
retransmitting the data transport block triggered by the preamble, wherein the modulation and coding scheme or the repetition level used for the data transport block is set according to the measured downlink channel state information indicated in the preamble.

6. The network element (510) of claim 5, wherein the measured downlink channel state information is indicated based on one of:
a predefined relationship between an identifier of the preamble and the measured downlink channel state information, or
a predefined relationship between the identifier of the preamble and relative channel state information indicating a difference between channel station information allocated by the network element and the measured downlink channel state information.

7. A method for wireless communication, performed by a user equipment, comprising: receiving (435) an information element configured to indicate:
a number of transport blocks for reporting feedback containing measured downlink channel state information,
a periodicity for the feedback, and
a cycle of semi-persistent scheduling reconfiguration or activation;
determining (410), by the user equipment (520), that a data transport block was not received; and
in response feeding back (420), to a network element (510), a preamble indicating measured downlink channel state information, wherein the preamble is indicative of non-reception of the data transport block by the user equipment,
wherein the preamble comprises a physical random access channel preamble and wherein the preamble triggers a retransmission of the data transport block,
receiving a retransmission of the data transport block triggered by the preamble, wherein the modulation and coding scheme or the repetition level used for the data transport block is set according to the measured downlink channel state information indicated in the preamble.

8. The method of claim 7, wherein the measured downlink channel state information is indicated based on one of:
a predefined relationship between an identifier of the preamble and the measured downlink channel state information, or
a predefined relationship between the identifier of the preamble and relative channel state information indicating a difference between channel station information allocated by the network element (510) and the measured downlink channel state information.

9. The method of claim 7, wherein the feeding back is configured to occur in one of the following manners:
for each data transport block that was not received,
when a transport block from a set of identified transport blocks was not received, or
with a configured periodicity.

## Patentansprüche

1. Teilnehmereinrichtung (520), die dazu ausgelegt ist, in einem 3GPP-System betrieben zu werden, und Mittel zum Durchführen von Folgendem umfasst:
Empfangen (435) eines Informationselements, das dazu ausgelegt ist, Folgendes anzuzeigen:
eine Anzahl von Transportblöcken zum Melden einer Rückmeldung, die gemessene Downlinkkanalzustandsinformationen enthält,
eine Periodizität für die Rückmeldung, und
einen Zyklus einer semipersistenten Planungsneuauslegung oder Aktivierung;
Bestimmen (410), dass ein Datentransportblock nicht empfangen wurde; und
in Reaktion darauf, Rückmelden (420) einer Präambel, die gemessene Downlinkkanalzustandsinformationen umfasst,
wobei die Präambel einen Nichtempfang des Datentransportblocks durch die Teilnehmereinrichtung anzeigt,
wobei die Präambel eine Präambel eines physischen Direktzugriffskanals umfasst und wobei die Präambel eine Neuübertragung des Datentransportblocks auslöst,
Empfangen einer Neuübertragung des Datentransportblocks, die von der Präambel ausgelöst wird, wobei das Modulations- und Codierschema oder das Wiederholungsniveau, das für den Datentransportblock gesendet wird, gemäß den gemessenen Downlinkkanalzustandsinformationen, die in der Präambel angezeigt werden, eingestellt ist.

2. Teilnehmereinrichtung (520) nach Anspruch 1, wobei die gemessenen Downlinkkanalzustandsinformationen auf Basis von einem von Folgendem angezeigt werden:
einer vordefinierten Beziehung zwischen einer Kennung der Präambel und den gemessenen Downlinkkanalzustandsinformationen, oder
einer vordefinierten Beziehung zwischen der Kennung der Präambel und der relativen Kanalzustandsinformationen, die eine Differenz zwischen Kanalstationsinformationen, die von einem Netzwerkelement (510) zugeteilt werden, und den gemessenen Downlinkkanalzustandsinformationen anzeigen.

3. Teilnehmereinrichtung (520) nach Anspruch 1, wobei die gemessenen Downlinkkanalzustandsinformationen mindestens eines von einem Kanalqualitätsindex, einer Referenzsignalempfangsleistung, einer Referenzsignalempfangsqualität, einer Referenzsignalstärkeanzeige und einem Signal-zu-Interferenzplus-Rauschen-Verhältnis umfassen.

4. Teilnehmereinrichtung (520) nach Anspruch 1, wobei das Rückmelden dazu ausgelegt ist, in einer der Folgenden Weisen zu erfolgen:
für jeden Datentransportblock, der nicht empfangen wurde,
wenn ein Transportblock aus einem Satz von identifizierten Transportblöcken nicht empfangen wurde, oder
mit einer ausgelegten Periodizität.

5. Netzwerkelement (510), das dazu ausgelegt ist, in einem 3GPP-System betrieben zu werden, und Mittel zum Durchführen von Folgendem umfasst:
Übertragen (435) eines Informationselements, das dazu ausgelegt ist, Folgendes anzuzeigen:
eine Anzahl von Transportblöcken zum Melden einer Rückmeldung, die gemessene Downlinkkanalzustandsinformationen enthält,
eine Periodizität für die Rückmeldung, und
einen Zyklus einer semipersistenten Planungsneuauslegung oder Aktivierung
Senden eines Datentransportblocks an eine Teilnehmereinrichtung (520);
Empfangen einer Rückmeldung von der Teilnehmereinrichtung (520), wobei die Rückmeldung eine Präambel umfasst, die gemessene Downlinkkanalzustandsinformationen anzeigt und ein Nichtempfangen des Datentransportblocks durch die Teilnehmereinrichtung anzeigt, wobei die Präambel eine Präambel eines physischen Direktzugriffskanals umfasst und wobei die Präambel eine Neuübertragung des Datentransportblocks auslöst; und
Neuübertragen des Datentransportblocks, das von der Präambel ausgelöst wird, wobei das Modulations- und Codierschema oder das Wiederholungsniveau, das für den Datentransportblock verwendet wird, gemäß den gemessenen Downlinkkanalzustandsinformationen, die in der Präambel angezeigt werden, eingestellt ist.

6. Netzwerkelement (510) nach Anspruch 5, wobei die gemessenen Downlinkkanalzustandsinformationen auf Basis von einem von Folgendem angezeigt werden:
einer vordefinierten Beziehung zwischen einer Kennung der Präambel und den gemessenen Downlinkkanalzustandsinformationen, oder
einer vordefinierten Beziehung zwischen der Kennung der Präambel und der relativen Kanalzustandsinformationen, die eine Differenz zwischen Kanalstationsinformationen, die vom Netzwerkelement zugeteilt werden, und den gemessenen Downlinkkanalzustandsinformationen anzeigen.

7. Verfahren für eine drahtlose Kommunikation, das von einer Teilnehmereinrichtung durchgeführt wird und Folgendes umfasst:
Empfangen (435) eines Informationselements, das dazu ausgelegt ist, Folgendes anzuzeigen:
eine Anzahl von Transportblöcken zum Melden einer Rückmeldung, die gemessene Downlinkkanalzustandsinformationen enthält,
eine Periodizität für die Rückmeldung, und
einen Zyklus einer semipersistenten Planungsneuauslegung oder Aktivierung;
Bestimmen (410) durch die Teilnehmereinrichtung (520), dass ein Datentransportblock nicht empfangen wurde; und
in Reaktion darauf Rückmelden (420) einer Präambel, die gemessene Downlinkkanalzustandsinformationen anzeigt, an ein Netzwerkelement (510), wobei die Präambel ein Nichtempfangen des Datentransportblocks durch die Teilnehmereinrichtung anzeigt,
wobei die Präambel eine Präambel eines physischen Direktzugriffskanals umfasst und wobei die Präambel eine Neuübertragung des Datentransportblocks auslöst,
Empfangen einer Neuübertragung des Datentransportblocks, die von der Präambel ausgelöst wird, wobei das Modulations- und Codierschema oder das Wiederholungsniveau, das für den Datentransportblock gesendet wird, gemäß den gemessenen Downlinkkanalzustandsinformationen, die in der Präambel angezeigt werden, eingestellt ist.

8. Verfahren nach Anspruch 7, wobei die gemessenen Downlinkkanalzustandsinformationen auf Basis von einem von Folgendem angezeigt werden:
einer vordefinierten Beziehung zwischen einer Kennung der Präambel und den gemessenen Downlinkkanalzustandsinformationen, oder
einer vordefinierten Beziehung zwischen der Kennung der Präambel und der relativen Kanalzustandsinformationen, die eine Differenz zwischen Kanalstationsinformationen, die vom Netzwerkelement (510) zugeteilt werden, und den gemessenen Downlinkkanalzustandsinformationen anzeigen.

9. Verfahren nach Anspruch 7, wobei das Rückmelden dazu ausgelegt ist, in einer der Folgenden Weisen zu erfolgen:
für jeden Datentransportblock, der nicht empfangen wurde,
wenn ein Transportblock aus einem Satz von identifizierten Transportblöcken nicht empfangen wurde, oder
mit einer ausgelegten Periodizität.

## Revendications

1. Équipement utilisateur (520) configuré pour fonctionner dans un système 3GPP et comprenant des moyens pour :
recevoir (435) un élément d'information configuré pour indiquer :
un nombre de blocs de transport pour rapporter une rétroaction contenant des informations d'état de canal de liaison descendante mesuré,
une périodicité de la rétroaction, et
un cycle de reconfiguration ou d'activation semi-persistante de planification ;
déterminer (410) qu'un bloc de transport de données n'a pas été reçu ; et
renvoyer (420) en réponse un préambule indiquant des informations d'état de canal de liaison descendante mesuré, dans lequel le préambule indique la non-réception du bloc de transport de données par l'équipement utilisateur,
dans lequel le préambule comprend un préambule de canal physique d'accès aléatoire, et dans lequel le préambule déclenche une retransmission du bloc de transport de données,
recevoir une retransmission du bloc de transport de données déclenchée par le préambule, dans lequel le schéma de modulation et de codage ou le niveau de répétition utilisé pour le bloc de transport de données est défini selon les informations d'état de canal de liaison descendante mesuré indiquées dans le préambule.

2. Équipement utilisateur (520) selon la revendication 1, dans lequel les informations d'état de canal de liaison descendante mesuré sont indiquées sur la base de l'un des éléments suivants :
une relation prédéfinie entre un identifiant du préambule et les informations d'état de canal de liaison descendante mesuré, ou
une relation prédéfinie entre l'identifiant du préambule et des informations d'état de canal relatif indiquant une différence entre des informations de station de canal allouées par un élément de réseau (510) et les informations d'état de canal de liaison descendante mesuré.

3. Équipement utilisateur (520) selon la revendication 1, dans lequel les informations d'état de canal de liaison descendante mesuré comprennent au moins un parmi un indice de qualité de canal, une puissance reçue de signal de référence, une qualité reçue de signal de référence, une indication de force de signal de référence et un rapport signal/interférence plus bruit.

4. Équipement utilisateur (520) selon la revendication 1, dans lequel la rétroaction est configurée pour se produire de l'une des manières suivantes :
pour chaque bloc de transport de données qui n'a pas été reçu,
lorsqu'un bloc de transport provenant d'un ensemble de blocs de transport identifiés n'a pas été reçu, ou
avec une périodicité configurée.

5. Équipement de réseau (510) configuré pour fonctionner dans un système 3GPP et comprenant des moyens pour :
transmettre (435) un élément d'information configuré pour indiquer :
un nombre de blocs de transport pour rapporter une rétroaction contenant des informations d'état de canal de liaison descendante mesuré,
une périodicité de la rétroaction, et
un cycle de reconfiguration ou d'activation semi-persistante de planification,
envoyer un bloc de transport de données à un équipement utilisateur (520) ;
recevoir une rétroaction de l'équipement utilisateur (520), la rétroaction comprenant un préambule indiquant des informations d'état de canal de liaison descendante mesuré et indiquant la non-réception du bloc de transport de données par l'équipement utilisateur, dans lequel le préambule comprend un préambule de canal physique d'accès aléatoire, et dans lequel le préambule déclenche une retransmission du bloc de transport de données ; et
effectuer une retransmission du bloc de transport de données déclenchée par le préambule, dans lequel le schéma de modulation et de codage ou le niveau de répétition utilisé pour le bloc de transport de données est défini selon les informations d'état de canal de liaison descendante mesuré indiquées dans le préambule.

6. Équipement de réseau (510) selon la revendication 5, dans lequel les informations d'état de canal de liaison descendante mesuré sont indiquées sur la base de l'un des éléments suivants :
une relation prédéfinie entre un identifiant du préambule et les informations d'état de canal de liaison descendante mesuré, ou
une relation prédéfinie entre l'identifiant du préambule et des informations d'état de canal relatif indiquant une différence entre des informations de station de canal allouées par l'élément de réseau et les informations d'état de canal de liaison descendante mesuré.

7. Procédé de communication sans fil mis en œuvre par un équipement utilisateur, comprenant les étapes suivantes :
recevoir (435) un élément d'information configuré pour indiquer :
un nombre de blocs de transport pour rapporter une rétroaction contenant des informations d'état de canal de liaison descendante mesuré,
une périodicité de la rétroaction, et
un cycle de reconfiguration ou d'activation semi-persistante de planification ;
déterminer (410) par l'équipement utilisateur (520) qu'un bloc de transport de données n'a pas été reçu ; et
renvoyer (420) en réponse à un élément de réseau (510) un préambule indiquant des informations d'état de canal de liaison descendante mesuré, dans lequel le préambule indique la non-réception du bloc de transport de données par l'équipement utilisateur,
dans lequel le préambule comprend un préambule de canal physique d'accès aléatoire, et dans lequel le préambule déclenche une retransmission du bloc de transport de données,
recevoir une retransmission du bloc de transport de données déclenchée par le préambule, dans lequel le schéma de modulation et de codage ou le niveau de répétition utilisé pour le bloc de transport de données est défini selon les informations d'état de canal de liaison descendante mesuré indiquées dans le préambule.

8. Procédé selon la revendication 7, dans lequel les informations d'état de canal de liaison descendante mesuré sont indiquées sur la base de l'un des éléments suivants :
une relation prédéfinie entre un identifiant du préambule et les informations d'état de canal de liaison descendante mesuré, ou
une relation prédéfinie entre l'identifiant du préambule et des informations d'état de canal relatif indiquant une différence entre des informations de station de canal allouées par l'élément de réseau (510) et les informations d'état de canal de liaison descendante mesuré.

9. Procédé selon la revendication 7, dans lequel la rétroaction est configurée pour se produire de l'une des manières suivantes :
pour chaque bloc de transport de données qui n'a pas été reçu,
lorsqu'un bloc de transport provenant d'un ensemble de blocs de transport identifiés n'a pas été reçu, ou
avec une périodicité configurée.
